# EUROPÄISCHE PATENTSCHRIFT

(11) **EP 1 840 012 B1**
(45) Veröffentlichungstag und Bekanntmachung des Hinweises auf die Patenterteilung: **29.04.2009**
(21) Anmeldenummer: 07003702.3
(22) Anmeldetag: 23.02.2007
(51) Int. Cl.: B62D 35/00

(54) **Luftleitvorrichtung für ein Fahrzeug**
Aerodynamic spoiler for a vehicle
Déflecteur aérodynamique pour un véhicule

(30) Priorität: 28.03.2006 DE 102006014263
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Fröschle, Mathias, 73760 Ostfildern (DE); Durm, Jürgen, 75417 Mühlacker (DE); Paul, Joachim, 70563 Stuttgart (DE)

(56) Entgegenhaltungen:
- EP-A- 1 738 996
- EP-A2- 1 118 529
- EP-A2- 1 138 582
- DE-A1-1102004 030 57

## Beschreibung

Die Erfindung betrifft eine Luftleitvorrichtung für ein Fahrzeug nach dem Oberbegriff des Patentanspruchs 1.

Eine solche Luftleitvorrichtung für ein Fahrzeug ist aus der DE 10 2004 030 571 A1 bekannt. Die Luftleiteinrichtung ist in einem Heckbereich des Fahrzeugs angeordnet und umfasst mindestens ein mittleres Hauptluftleitelement, das von einer eingefahrenen Ruhestellung in eine ausgefahrene Betriebsstellung verlagerbar ist. Zusätzlich sind seitliche Zusatzluftleitelemente am Hauptluftleitelement vorgesehen, die zusammen mit dem mittleren Hauptluftleitelement verlagerbar und gegenüber dem mittleren Hauptluftleitelement klappmesserartig um eine Schwenkachse am Hauptluftleitelement drehbar sind, damit sie von einer ebenfalls eingefahrenen Ruhestellung in eine ebenfalls ausgefahrene Betriebsstellung überführt werden können.

Aus der DE 30 19 150 A1 ist eine Luftleitvorrichtung für ein Fahrzeug bekannt, die in einem oben liegenden Heckbereich des Fahrzeugs angeordnet ist und ein Luftleitelement umfasst, welches von einer Ruhestellung, in der es oberflächenbündig in den Formverlauf des Heckbereichs integriert ist, in eine ausgefahrene Betriebsstellung verlagerbar ist. Das Luftleitelement ist als Tragflügel ausgebildet, der mittels einer Betätigungseinrichtung von der Ruhestellung in die Betriebsstellung und umgekehrt verlagerbar bzw. überführbar ist.

Die DE 43 05 090 A1 offenbart ebenfalls eine Luftleitvorrichtung für ein Fahrzeug, die in einem Heckbereich des Fahrzeugs angeordnet ist und ein Luftleitelement umfasst, welches von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von der Ruhestellung in die Betriebsstellung und umgekehrt verlagerbar ist.

Mit den aus der DE 30 19 150 A1 und aus der DE 43 05 090 A1 bekannten Luftleitvorrichtungen kann der Hinterachsabtriebsbeiwert (cₐₕ-Wert) des Kraftfahrzeugs bei gleichbleibendem oder auch verbessertem Luftwiderstandsbeiwert (c_{w}-Wert) erhöht werden, wobei diese bekannten Luftleitelemente in der Ruhestellung und in der Betriebsstellung jeweils dieselbe Quererstreckung aufweisen.

Die nachveröffentlichte EP-A-1738996 offenbart eine Luftleitvorrichtung für ein Fahrzeug, die ein mittleres Hauptluftleitelement sowie zwei seitliche Zusatzluftleitelemente umfasst, wobei mit Hilfe der Zusatzluftleitelemente die Quererstreckung der Luftleitvorrichtung in der Betriebsstellung vergrößert werden und insbesondere der Hinterachsabtriebsbeiwert weiter erhöht werden kann. Nach der EP-A-1738996 erfolgt die Verstellbewegung der seitlichen Zusatzluftleitelemente gegenüber dem mittleren Hauptluftleitelement dann, wenn das Hauptluftleitelement von der Ruhestellung in die Betriebsstellung verlagert wurde. Die Verstellung der Zusatzluftleitelemente gegenüber dem Hauptluftleitelement erfolgt demnach zeitlich nach bzw. entkoppelt von der Verlagerung des Hauptluftleitelements.

Hiervon ausgehend liegt der vorliegenden Erfindung das Problem zu Grunde eine Luftleitvorrichtung für ein Fahrzeug zu schaffen, die einfach aufgebaut ist.

Dieses Problem wird dadurch gelöst, dass die eingangs genannte Luftleitvorrichtung durch die Merkmale des kennzeichnenden Teils des Patentanspruchs 1 weitergebildet ist.

Die seitlichen Zusatzluftleitelemente sind gegenüber dem oder jedem mittleren Hauptluftleitelement klappmesserartig drehbar, um dieselben von einer ebenfalls eingefahrenen Ruhestellung in eine ebenfalls ausgefahrene Betriebsstellung zu überführen. Erfindungsgemäß ist das mittlere Haupluftleitelement über zwei teleskopartige Betätigungseinrichtungen von der eingefahrenen Ruhestellung in eine ausgefahrene Betriebsstellung und umgekehrt translatorisch verlagerbar, wobei jede der teleskopartigen Betätigungseinrichtungen ein karosseriefestes Rohr umfasst, in dem ein hauptluftlekelementfestes Rohr geführt ist, wobei jedes der seitlichen Zusatzluftleitelemente an dem hauptluftleitelementfesten Rohr einer teleskopartigen Betätigungseinrichtung gelagert ist.

Vorteilhaft ist jedes hauptluftleitelementfeste Rohr bei der translatorischen Bewegung desselben gegenüber dem karosseriefesten Rohr der jeweiligen teleskopartigen Betätigungseinrichtung relativ zum karosseriefesten Rohr um eine Längsachse desselben drehbar, um die Zusatzluftleitelemente gegenüber dem Hauptluftleitelement zu drehen.

Nach einer vorteilhaften Weiterbildung der Erfindung ist die Verstellung der seitlichen Zusatzluftleitelemente an die Verlagerung des oder jedes mittleren Hauptluftleitelements bei der Überführung desselben bzw. derselben von der Ruhestellung in die Betriebsstellung und umgekehrt derart gekoppelt, dass die seitlichen Zusatzluftleitelemente zeitgleich bzw. simultan mit der Verlagerung des oder jedes mittleren Hauptluftleitelements gegenüber dem oder jedem Hauptluftleitelement von der Ruhestellung in die Betriebsstellung bzw. von der Betriebsstellung in die Ruhestellung überführt werden können. Hierbei werden die seitlichen Zusatzluftleitelemente gegenüber dem oder jedem mittleren Hauptluftleitelement klappmesserartig verdreht. Innerhalb kürzester Zeit sowie auf einfache Art und Weise kann hierdurch die Quererstreckung der Luftleitvorrichtung angepasst werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Heckbereich eines Fahrzeugs mit einer erfindungsgemäßen Luftleitvorrichtung in Ruhestellung in Draufsicht;
- Fig. 2: den Heckbereich der Fig. 1 mit der Luftleitvorrichtung in Betriebsstellung in einer Ansicht analog Fig. 1;
- Fig. 3: den Heckbereich der Fig. 1, 2 mit der Luftleitvorrichtung in Betriebsstellung in Rückansicht;
- Fig. 4: ein vergrößertes Detail der Fig. 3;
- Fig. 5: den Heckbereich der Fig. 1 bis 4 mit der Luftleitvorrichtung in Ruhestellung in Seitenansicht;
- Fig. 6: den Heckbereich der Fig. 1 bis 5 mit der Luftleitvorrichtung in Betriebsstellung in einer Ansicht analog Fig. 5;
- Fig. 7: eine Detailansicht der Luftleitvorrichtung in Ruhestellung im Bereich eines Zusatzluftleitelements in Draufsicht;
- Fig. 8: die Detailansicht der Fig. 8 mit der Luftleitvorrichtung in Betriebsstellung in Draufsicht;
- Fig. 9: die Detailansicht der Fig. 7 und 8 mit der Luftleitvorrichtung in Betriebsstellung in einer Ansicht von schräg hinten; und
- Fig. 10: ein Detail der Luftleitvorrichtung der Fig. 1 bis 9.

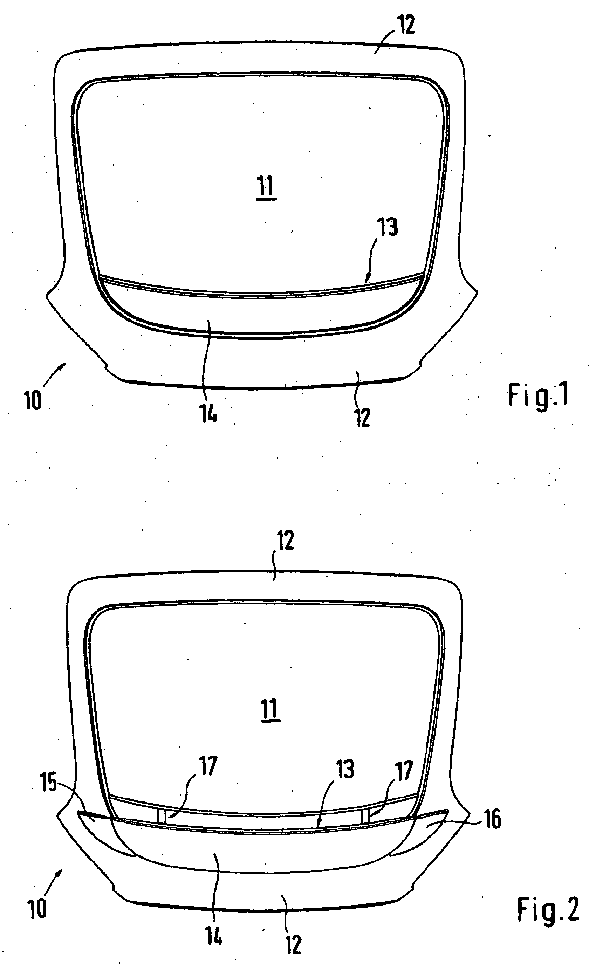

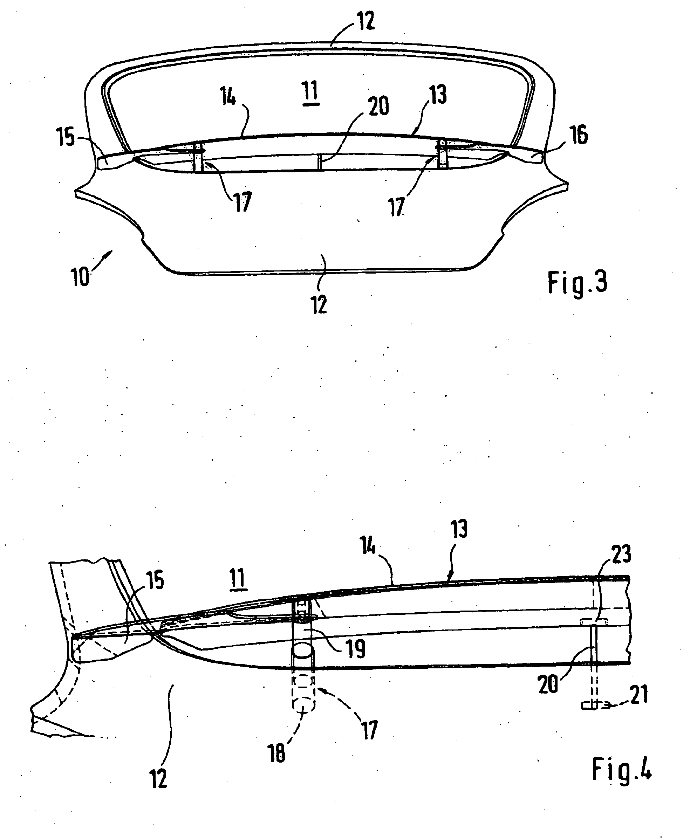

Fig. 1 bis 9 zeigen verschiedene Ansichten eines Heckbereichs 10 eines Fahrzeugaufbaus, wobei der Heckbereich 10 eine Heckscheibe 11 umfasst, die vorne, hinten sowie seitlich von einem Karosserieteil 12 umschlossen ist. In einem hinteren Bereich des Karosserieteils 12 des fließheckartig ausgebildeten Heckbereichs 10 und demnach unterhalb des Heckfensters 11 ist eine Luftleitvorrichtung 13 positioniert, wobei in Fig. 1, 5 und 7 die Luftleitvorrichtung 13 in einer Ruhestellung und in Fig. 2, 3, 4, 6, 8 und 9 dieselbe in einer Betriebsstellung gezeigt ist.

In der Ruhestellung der Luftleitvorrichtung 13 (siehe Fig. 1, 5, 7) ist dieselbe oberflächenbündig in den Heckbereich 10 des Fahrzeugs integriert. In der Betriebsstellung der Luftleitvorrichtung 13 (siehe Fig. 2, 3, 4, 6, 8, 9) hingegen ist dieselbe aus der Oberflächenkontur des Heckbereichs 10 herausbewegt.

Die erfindungsgemäße Luftleitvorrichtung 13 verfügt im gezeigten Ausführungsbeispiel über ein mittleres Hauptluftleitelement 14 sowie zwei seitliche Zusatzluftleitelemente 15 und 16. Die seitlichen Zusatzluftleitelemente 15, 16 sind lediglich in der Betriebsstellung (siehe Fig. 2, 3, 4, 6, 8, 9) der Luftleitvorrichtung 13 sichtbar, wobei dieselben in der Betriebsstellung die Quererstreckung der Luftleitvorrichtung 13 bzw. des Hauptluftleitelements 14 vergrößern. In der Ruhestellung sind die seitlichen Zusatzluftleitelemente 15, 16 vom mittleren Hauptluftleitelement 14 verdeckt.

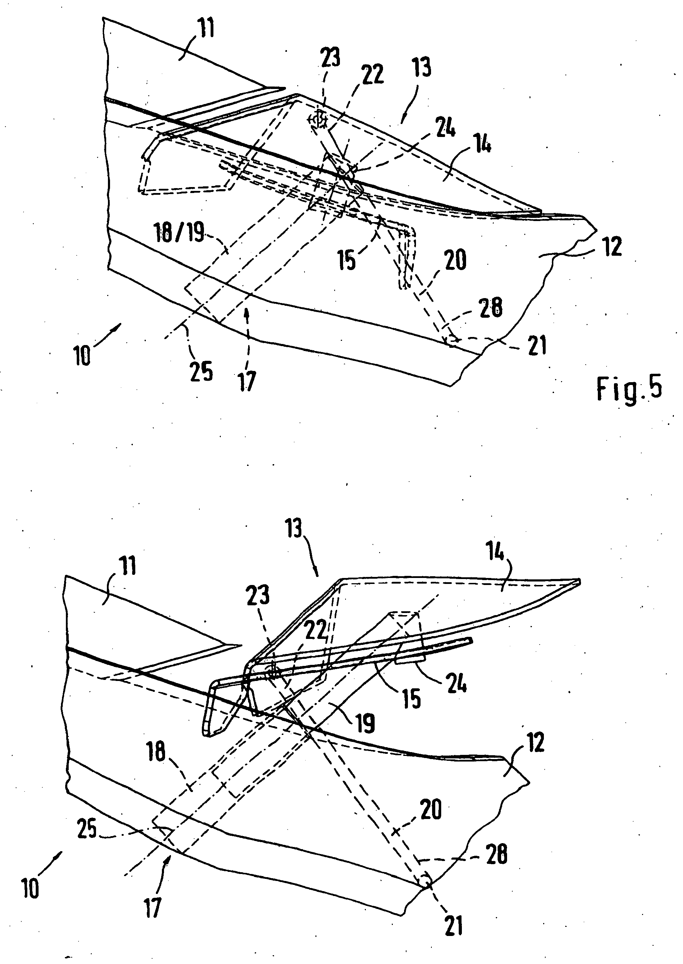

Das mittlere Hauptluftleitelement 14 wird bei der Überführung bzw. Verlagerung von der Ruhestellung in die Betriebsstellung bzw. von der Betriebsstellung in die Ruhestellung im Sinne einer nach oben gerichteten Schwenkbewegung angehoben bzw. abgesenkt und dabei verschwenkt, wobei die beiden seitlichen Zusatzluftleitelemente 15, 16 diese Bewegung des mittleren Hauptluftleitelements 14 mit ausführen. Das mittlere Hauptluftleitelement 14 ist mit Hilfe von teleskopartigen Betätigungseinrichtungen 17 (siehe insbesondere Fig. 5 und 6) von der eingefahrenen Ruhestellung in die ausgefahrene Betriebsstellung verlagerbar. Zu beiden Seiten des Hauptluftleitelements 14 greift dabei jeweils eine teleskopartige Betätigungseinrichtung 17 an dem Hauptluftleitelement 14 an.

Jede der teleskopartigen Betätigungseinrichtungen 17 wird, wie am besten Fig. 5 bis 9 entnommen werden kann, von einem karosseriefesten Rohr 18 und einem hauptluftleitelementfesten Rohr 19 gebildet, wobei das hauptluftleitelementfeste Rohr 19 im karosseriefesten Rohr 18 derart teleskopartig geführt ist, dass dasselbe gegenüber dem karosseriefesten Rohr 18 translatorisch bzw. linear verfahren werden kann. Hierdurch wird eine translatorische bzw. lineare Bewegungskomponente des mittleren Hauptluftleitelements 14 bei der Verlagerung desselben von der Ruhestellung in die Betriebstellung bzw. umgekehrt von der Betriebstellung in die Ruhestellung vorgegeben.

Durch eine Kopplungseinrichtung 20, die an einem ersten Ende 28 mit dem Karosserieteil 12 über ein Gelenk 21 und an einem zweiten Ende 22 mit dem Hauptluftleitelement 14 über ein Gelenk 23 jeweils gelenkig verbunden ist, ist der oben beschriebenen translatorischen bzw. linearen Bewegungskomponente des Hauptluftleitelements 14 eine rotatorische Bewegungskomponente überlagerbar, nämlich um das Gelenk 23, über welches die Kopplungseinrichtung 20 am Hauptluftleitelement 14 gelenkig angreift. Die Kopplungseinrichtung 20 ist im gezeigten Ausführungsbeispiel als Kopplungslenker bzw. Kopplungsstange ausgeführt. Die Kopplungseinrichtung 20 kann auch durch ein Federelement ersetzt werden.

Bei der Überführung des Hauptluftleitelements 14 von der insbesondere in Fig. 5 gezeigten Ruhestellung in die insbesondere in Fig. 6 gezeigte Betriebsstellung mit Hilfe der teleskopartigen Betätigungseinrichtungen 17 wird demnach einerseits das Hauptluftleitelement 14 translatorisch nach oben bewegt, wobei gleichzeitig bzw. simultan hierzu das Hauptluftleitelement 14 um den durch das Gelenk 23 der Kopplungseinrichtung 20 definierten Drehpunkt gedreht wird. Hierdurch ergibt sich die nach oben gerichtete Schwenkbewegung des Hauptluftleitelements 14 bei der Überführung desselben von der Ruhestellung in die Betriebsstellung, wobei die seitlichen Zusatzluftleitelemente 15 und 16 diese nach oben gerichtete Schwenkbewegung des mittleren Hauptluftleitelements 14 mit ausführen.

Die seitlichen Zusatzluftleitelemente 15 und 16 sind über jeweils ein zusatzluftleitelementfestes Rohr 24 an einem hauptluftleitelementfesten Rohr 19 einer benachbarten teleskopartigen Betätigungseinrichtung 17 gelagert. Bei der linearen Bewegung der hauptluftleitelementfesten Rohre 19 gegenüber den karosseriefesten Rohren 18 der teleskopartigen Betätigungseinrichtungen 17 sind die hauptluftleitelementfesten Rohre 19 gegenüber den karosseriefesten Rohren 18 drehbar, und zwar um eine Längsachse 25 der Rohre 18, 19, so dass bevorzugt simultan bzw. gleichzeitig mit der durch die teleskopartigen Betätigungseinrichtungen 17 initiierten Verlagerung des mittleren Hauptluftleitelements 14 die seitlichen Zusatzluftleitelemente 15 und 16 gegenüber dem mittleren Hauptluftleitelement 14 klappmesserartig um die Längsachse 25 der teleskopartigen Betätigungseinrichtungen 17 klappmesserartig gedreht werden können. Das klappmesserartige Drehen der seitlichen Zusatzluftleitelemente 15 und 16 gegenüber dem mittleren Hauptluftleitelement 14 ist demnach mechanisch an die Verlagerung des mittleren Hauptluftleitelements 14 gekoppelt.

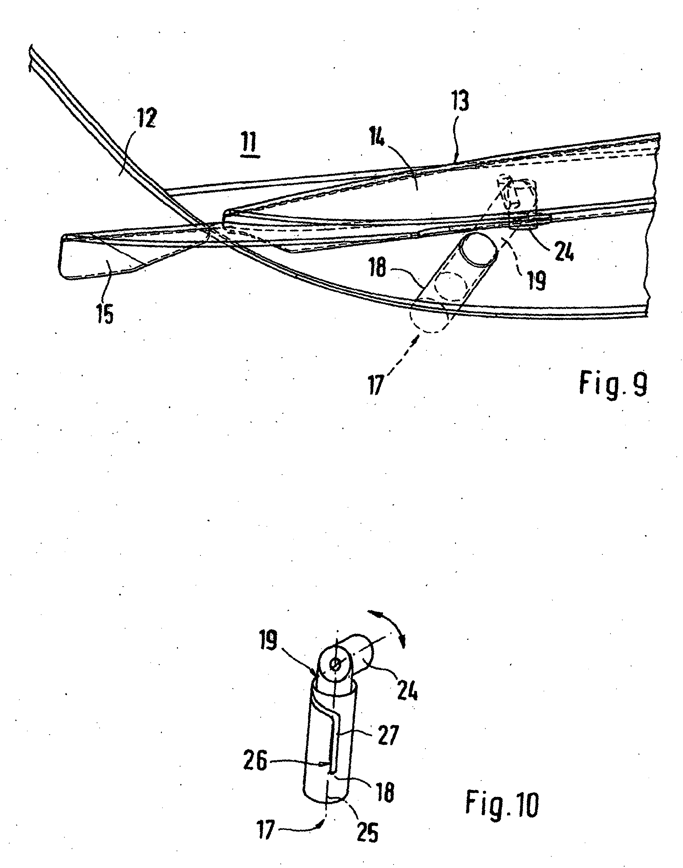

Die obige Kopplung kann dadurch realisiert werden, dass gemäß Fig. 10 das karosseriefeste Rohr 18 eine Kulissenführung 26 und das hauptluftleitelementfeste Rohr 19 einen Stift 27 umfasst, der in der Kulissenführung 26 geführt ist.

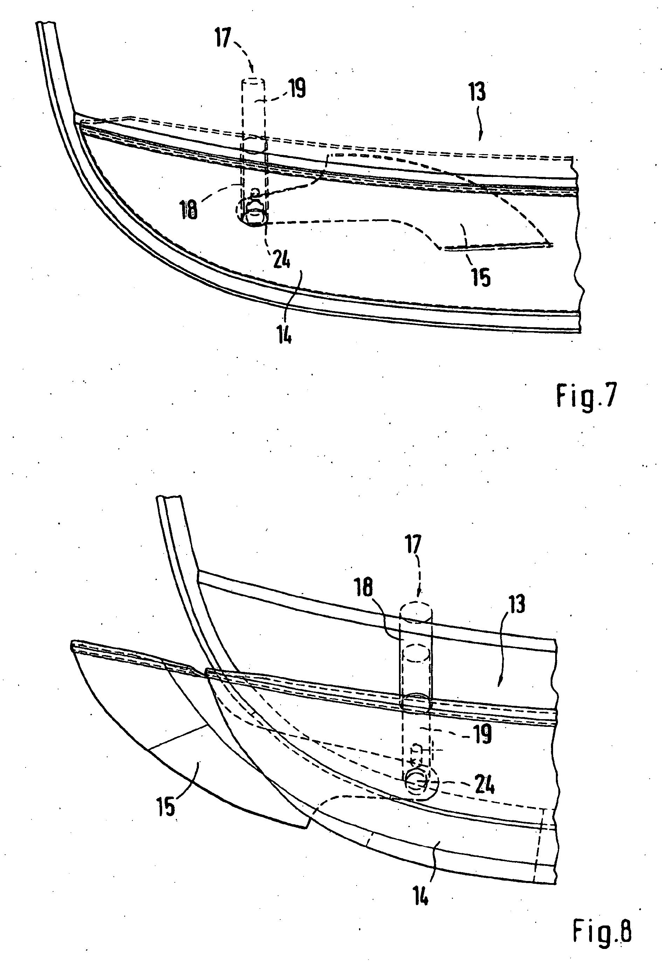

Bei der translatorischen Verschiebung des hauptluftleitelementfesten Rohrs 19 gegenüber dem karosseriefesten Rohr 18 wird der Stift 25 in der Kulissenführung 26 bewegt und bedingt durch die Konturierung der Kulissenführung 26 eine Verdrehung des hauptluftleitelementfesten Rohrs 19 gegenüber dem karosseriefesten Rohr 18 verursacht. Diese Drehung des hauptluftleitelementfesten Rohrs 19 wird über das zusatzluftleitelementfeste Rohr 24 auf die Zusatzluftleitelemente 15, 16 übertragen, so dass dieselben letztendlich simultan bzw. gleichzeitig mit der Verlagerung des mittleren Hauptluftleitelements 14 gegenüber demselben klappmesserartig verdreht werden. Gemäß Fig. 7 und 8 sind dabei die seitlichen Zusatzluftleitelemente 15 und 16 gegenüber dem mittleren Hauptluftleitelement 14 um einen Winkel von in etwa 180° drehbar. Die Kulissenführung 26 kann auch so ausgeführt sein, dass die Zusatzluftleitelemente 15, 16 zeitversetzt zum Hauptluftleitelement 14 verfahren werden. Die Form der Konturierung der Kulissenführung bestimmt demnach den zeitlichen Ablauf der Bewegung von Zusatzluftleitelementen 15, 16 und Hauptluftleitelement 14. Es sei darauf hingewiesen, dass im Unterschied zu dem in Fig. 10 gezeigten Beispiel auch das karosseriefeste Rohr 18 den Stift und das hauptluftleitelementfeste Rohr 19 die Kulissenführung umfassen kann.

Wie am besten einem Vergleich der Fig. 5 und 6 entnommen werden kann, verändert sich bei der Überführung der Luftleitvorrichtung 13 von der in Fig. 5 dargestellten Ruhestellung in die in Fig. 6 dargestellte Betriebsstellung einerseits der Winkel zwischen dem Hauptluftleitelement 14 und dem hauptluftleitelementfesten Rohr 19 sowie andererseits der Winkel zwischen den Zusatzluftleitelementen 15, 16 und dem hauptluftleitelementfesten Rohr 19. Hierdurch verändert sich demnach auch der Winkel zwischen dem hauptluftleitelementfesten Rohr 19 und dem zusatzluftleitelementfesten Rohr 24. Zum Ausgleich dieser Winkelveränderung dient eine nicht-dargestellte Kupplung, die vorzugsweise zwischen dem hauptluftleitelementfesten Rohr 19 und dem zusatzluftleitelementfesten Rohr 24 ausgebildet ist. Diese Kupplung kann z. B. als Kardangelenk ausgeführt sein.

Wie bereits erwähnt, ist im gezeigten Ausführungsbeispiel die klappmesserartige Verdrehung der seitlichen Zusatzluftleitelemente 15 und 16 gegenüber dem Hauptluftleitelement 14 an die Verlagerung des Hauptluftleitelements 14 mechanisch gekoppelt, so dass zur Verstellung des Hauptluftleitelements 14 sowie der seitlichen Zusatzluftleitelemente 15 und 16 lediglich ein einziger Antrieb erforderlich ist.

Im Unterschied zum gezeigten Ausführungsbeispiel kann jedoch die klappmesserartige Verdrehung der seitlichen Zusatzluftleitelemente 15 und 16 gegenüber dem mittleren Luftleitelement 14 auch mechanisch entkoppelt sein, wobei dann den seitlichen Zusatzluftleitelementen 15 und 16 separate Antriebe zugeordnet sind. Die Antriebe der Zusatzluftleitelemente 15 und 16 sind dann vorzugsweise mit dem Antrieb der teleskopartigen Betätigungseinrichtungen 17 des mittleren Hauptluftleitelements 14 steuerungsseitig gekoppelt. In diesem Fall sind die Zusatzluftleitelemente dann auch entkoppelt vom Hauptluftleitelement bewegbar, um die Verstellbewegungen von Hauptluftleitelement und Zusatzluftleitelementen z.B. nacheinander auszuführen. Ebenso können in diesem Fall z.B. geschwindigkeitsabhängige Verstellungen der Zusatzluftleitelemente realisiert werden, die unabhängig von einer geschwindigkeitsabhängigen Verstellung des Hauptluftleitelements sind.

## Patentansprüche

1. Luftleitvorrichtung (13) für ein Fahrzeug, insbesondere für ein Personenkraftfahrzeug, die in einem Heckbereich (10) des Fahrzeugs anordenbar ist und mindestens ein mittleres Hauptluftleitelement (14) umfasst, welches von einer eingefahrenen Ruhestellung in eine ausgefahrene Betriebsstellung verlagerbar ist, wobei seitliche Zusatzluftleitelemente (15, 16) zusammen mit dem oder jedem mittleren Hauptluftleitelement verlagerbar und gegenüber dem oder jedem mittleren Hauptluftleitelement (14) klappmesserartig drehbar sind, um dieselben von einer ebenfalls eingefahrenen Ruhestellung in eine ebenfalls ausgefahrene Betriebsstellung zu überführen, **dadurch gekennzeichnet, dass** das mittlere Hauptluftleitelement (14) über vorzugsweise zwei teleskopartige Betätigungseinrichtungen (17) von der eingefahrenen Ruhestellung in eine ausgefahrene Betriebsstellung und umgekehrt translatorisch bzw. linear verlagerbar ist, wobei jede der teleskopartigen Betätigungseinrichtungen (17) ein karosseriefestes Rohr (18) umfasst, in dem ein hauptluftleitelementfestes Rohr (19) geführt ist, und dass jedes der seitlichen Zusatzluftleitelemente (15, 16) an dem hauptluftleitelementfesten Rohr (19) einer teleskopartigen Betätigungseinrichtung (17) gelagert ist.

2. Luftleitvorrichtung nach Anspruch 1, **dadurch gekennzeichnet, dass** die seitlichen Zusatzluftleitelemente (15, 16) gegenüber dem oder jedem mittleren Hauptluftleitelement (14) um einen Winkel von in etwa 180° drehbar sind.

3. Luftleitvorrichtung nach Anspruch 1 oder 2, **dadurch gekennzeichnet, dass** die seitlichen Zusatzluftleitelemente (15, 16) zeitgleich bzw. simultan mit der Verlagerung des oder jedes mittleren Hauptluftleitelements (14) von der ebenfalls eingefahrenen Ruhestellung in die ebenfalls ausgefahrene Betriebsstellung überführbar sind.

4. Luftleitvorrichtung nach einem oder mehreren der Ansprüche 1 bis 3, **gekennzeichnet durch** eine Kopplungseinrichtung (20), die an einem Ende mit einem Karosserieteil (12) und an einem gegenüberliegenden Ende mit dem Hauptluftleitelement (14) über Gelenke (21, 23) gelenkig verbunden ist.

5. Luftleitvorrichtung nach Anspruch 4, **dadurch gekennzeichnet, dass** durch die Kopplungseinrichtung (20) der durch die teleskopartigen Betätigungseinrichtungen (17) vorgegebenen translatorischen bzw. linearen Bewegungskomponente des Hauptluftleitelements (14) eine rotatorische Bewegungskomponente um das Gelenk (23) der Kopplungseinrichtung (20) überlagerbar ist.

6. Luftleitvorrichtung nach Anspruch 1, **dadurch gekennzeichnet, dass** jedes seitliche Zusatzluftleitelement (15, 16) über ein zusatzluftleitelementfestes Rohr (24) an dem hauptluftleitelementfesten Rohr (19) der jeweiligen teleskopartigen Betätigungseinrichtung (17) gelagert ist, wobei eine Winkelveränderung zwischen dem zusatzluftleitelementfesten Rohr (24) und dem hauptluftleitelementfesten Rohr (19) bei der Überführung des mittleren Hauptluftleitelements (14) von der Ruhestellung in die Betriebsstellung bzw. umgekehrt über eine Kupplung ausgleichbar ist.

7. Luftleitvorrichtung nach einem der vorhergehenden Ansprüche, **dadurch gekennzeichnet, dass** jedes hauptluftleitelementfeste Rohr (19) bei der translatorischen bzw. linearen Bewegung desselben gegenüber dem karosseriefesten Rohr (18) der jeweiligen teleskopartigen Betätigungseinrichtung (17) relativ zum karosseriefesten Rohr (18) um eine Längsachse desselben drehbar ist, wobei hierdurch die Verstellung der seitlichen Zusatzluftleitelemente (15, 16) gegenüber dem mittleren Hauptluftleitelements (14) an die Verlagerung des mittleren Hauptluftleitelements (14) mechanisch koppelbar ist.

8. Luftleitvorrichtung nach Anspruch 7, **dadurch gekennzeichnet, dass** hierzu das karosseriefeste Rohr (18) eine Kulissenführung (26) aufweist, in welche ein Stift (27) des hauptluftleitelementfesten Rohrs (19) eingreift.

9. Luftleitvorrichtung nach Anspruch 7, **dadurch gekennzeichnet, dass** hierzu das hauptluftleitelementfeste Rohr eine Kulissenführung aufweist, in welche ein Stift des karosseriefesten Rohrs eingreift.

10. Luftleitvorrichtung nach Anspruch 8 oder 9, **dadurch gekennzeichnet, dass** die Form der Konturierung der Kulissenführung den zeitlichen Ablauf der Bewegung von Zusatzluftleitelementen (15, 16) und Hauptluftleitelement (14) bestimmt.

11. Luftleitvorrichtung nach einem oder mehreren der Ansprüche 1 bis 10, **dadurch gekennzeichnet, dass** die seitlichen Zusatzluftleitelemente (15, 16) in Ruhestellung des mittleren Hauptluftleitelements (14) nicht sichtbar sind.

## Claims

1. Aerodynamic spoiler (13) for a vehicle, in particular for a passenger motor vehicle, which aerodynamic spoiler can be arranged in a rear region (10) of the vehicle and comprises at least one central main air-guiding element (14) which can be displaced from a retracted inoperative position into an extended operative position, with it being possible for lateral additional air-guiding elements (15, 16) to be displaced together with the or each central main air-guiding element, and to be rotated relative to the or each central main air-guiding element (14) in the manner of a folding knife, in order to transfer the same from a likewise retracted inoperative position into a likewise extended operative position, **characterized in that** the central main air-guiding element (14) can be displaced via preferably two telescopic actuating devices (17) from the retracted inoperative position into an extended operative position and *vice versa* in a translatory or linear fashion, with each of the telescopic actuating devices (17) comprising a tube (18) which is fixed with respect to the body and in which is guided a tube (19) which is fixed with respect to the main air-guiding element, and **in that** each of the lateral additional air-guiding elements (15, 16) is mounted on the tube (19), which is fixed with respect to the main air-guiding element, of a telescopic actuating device (17).

2. Aerodynamic spoiler according to Claim 1, **characterized in that** the lateral additional air-guiding elements (15, 16) are rotatable relative to the or each central main air-guiding element (14) by an angle of approximately 180°.

3. Aerodynamic spoiler according to Claim 1 or 2, **characterized in that** the lateral additional air-guiding elements (15, 16) can be transferred either synchronously or simultaneously with the displacement of the or of each central main air-guiding element (14) from the likewise retracted inoperative position into the likewise extended operative position.

4. Aerodynamic spoiler according to one or more of Claims 1 to 3, **characterized by** a coupling device (20) which is articulatedly connected at one end to a body part (12) and at an opposite end to the main air-guiding element (14) by means of joints (21, 23).

5. Aerodynamic spoiler according to Claim 4, **characterized in that,** by means of the coupling device (20), the translatory or linear movement component of the main air-guiding element (14) which is predefined by the telescopic actuating devices (17) can have superposed on it a rotational movement component about the joint (23) of the coupling device (20).

6. Aerodynamic spoiler according to Claim 1, **characterized in that** each lateral additional air-guiding element (15, 16) is mounted by means of a tube (24), which is fixed with respect to the additional air-guiding element, on the tube (19), which is fixed with respect to the main air-guiding element, of the respective telescopic actuating device (17), with it being possible for a change in angle between the tube (24), which is fixed with respect to the additional air-guiding element, and the tube (19), which is fixed with respect to the main air-guiding element, during the transfer of the central main air-guiding element (14) from the inoperative position into the operative position or *vice versa* to be compensated by means of a clutch.

7. Aerodynamic spoiler according to one of the preceding claims, **characterized in that** each tube (19) which is fixed with respect to the main air-guiding element can, during the translatory or linear movement of the same relative to the tube (18), which is fixed with respect to the body, of the respective telescopic actuating device (17), be rotated relative to the tube (18), which is fixed with respect to the body, about a longitudinal axis of the same, with it being possible in this way for the adjustment of the lateral additional air-guiding elements (15, 16) relative to the central main air-guiding element (14) to be mechanically coupled to the displacement of the central main air-guiding element (14).

8. Aerodynamic spoiler according to Claim 7, **characterized in that,** for this purpose, the tube (18) which is fixed with respect to the body has a slotted guide (26) into which a pin (27) of the tube (19) which is fixed with respect to the main air-guiding element engages.

9. Aerodynamic spoiler according to Claim 7, **characterized in that,** for this purpose, the tube which is fixed with respect to the main air-guiding element has a slotted guide into which a pin of the tube which is fixed with respect to the body engages.

10. Aerodynamic spoiler according to Claim 8 or 9, **characterized in that** the shape of the contouring of the slotted guide determines the time profile of the movement of additional air-guiding elements (15, 16) and of the main air-guiding element (14).

11. Aerodynamic spoiler according to one or more of Claims 1 to 10, **characterized in that** the lateral additional air-guiding elements (15, 16) cannot be seen in the inoperative position of the central main air-guiding element (14).

## Revendications

1. Dispositif déflecteur d'air (13) pour un véhicule, en particulier pour un véhicule automobile, qui peut être disposé dans une partie arrière (10) du véhicule, et qui comprend au moins un élément déflecteur d'air principal central (14), qui peut être déplacé d'une position de repos rentrée dans une position de fonctionnement sortie, des éléments déflecteurs d'air supplémentaires latéraux (15, 16) pouvant être déplacés conjointement avec le ou chaque élément déflecteur d'air principal central et pouvant être tournés par rapport à l'élément ou à chaque élément déflecteur d'air principal central (14) comme un couteau pliant, afin de les transférer d'une position de repos également rentrée dans une position de fonctionnement également sortie, **caractérisé en ce que** l'élément déflecteur d'air principal central (14) peut être déplacé en translation ou linéairement par le biais de deux dispositifs d'actionnement télescopiques (17), de préférence, de la position de repos rentrée dans une position de fonctionnement sortie et inversement, chacun des dispositifs d'actionnement télescopiques (17) comprenant un tube (18) fixé à la carrosserie dans lequel est guidé un tube (19) fixé à l'élément déflecteur d'air principal, et **en ce que** chacun des éléments déflecteurs d'air supplémentaires latéraux (15, 16) est monté sur le tube (19) fixé à l'élément déflecteur d'air principal d'un dispositif d'actionnement télescopique (17).

2. Dispositif déflecteur d'air selon la revendication 1, **caractérisé en ce que** les éléments déflecteurs d'air supplémentaire latéraux (15, 16) peuvent tourner d'un angle d'environ 180° par rapport à l'élément ou à chaque élément déflecteur d'air principal central (14).

3. Dispositif déflecteur d'air selon la revendication 1 ou 2, **caractérisé en ce que** les éléments déflecteurs d'air supplémentaires latéraux (15, 16) peuvent être transférés en même temps ou simultanément avec le décalage de l'élément ou de chaque élément déflecteur d'air principal central (14) depuis la position de repos également rentrée dans la position de fonctionnement également sortie.

4. Dispositif déflecteur d'air selon l'une quelconque ou plusieurs des revendications 1 à 3, **caractérisé par** un dispositif d'accouplement (20) qui est connecté de manière articulée à une extrémité à une partie de la carrosserie (12) et à une extrémité opposée à l'élément déflecteur d'air principal (14) par le biais d'articulations (21, 23).

5. Dispositif déflecteur d'air selon la revendication 4, **caractérisé en ce que** grâce au dispositif d'accouplement (20), on peut superposer à la composante de déplacement en translation ou linéaire de l'élément déflecteur d'air principal (14) prédéfinie par les dispositifs d'actionnement télescopiques (17), une composante de déplacement rotative autour de l'articulation (23) du dispositif d'accouplement (20).

6. Dispositif déflecteur d'air selon la revendication 1, **caractérisé en ce que** chaque élément déflecteur d'air supplémentaire latéral (15, 16) est monté par le biais d'un tube (24) fixé à l'élément déflecteur d'air supplémentaire au tube (19) fixé à l'élément déflecteur d'air principal de chaque dispositif d'actionnement télescopique (17), une variation angulaire entre le tube (24) fixé à l'élément déflecteur d'air supplémentaire et le tube (19) fixé à l'élément déflecteur d'air principal lors du transfert de l'élément déflecteur d'air principal (14) de la position de repos dans la position de fonctionnement et inversement pouvant être compensée par le biais d'un accouplement.

7. Dispositif déflecteur d'air selon l'une quelconque des revendications précédentes, **caractérisé en ce que** chaque tube (19) fixé à l'élément déflecteur d'air principal lors du mouvement de translation ou linéaire de celui-ci par rapport au tube (18) fixé à la carrosserie du dispositif d'actionnement télescopique respectif (17) peut tourner par rapport au tube (18) fixé à la carrosserie autour d'un axe longitudinal, le déplacement des éléments déflecteurs d'air supplémentaires latéraux (15, 16) par rapport à l'élément déflecteur d'air principal central (14) pouvant de ce fait être accouplé au déplacement de l'élément déflecteur d'air principal central (14).

8. Dispositif déflecteur d'air selon la revendication 7, **caractérisé en ce que** le tube (18) fixé à la carrosserie présente à cet effet un guide à coulisse (26) dans lequel vient en prise une goupille (27) du tube (19) fixé à l'élément déflecteur d'air principal.

9. Dispositif déflecteur d'air selon la revendication 7, **caractérisé en ce que** le tube fixé à l'élément déflecteur d'air principal présente un guide à coulisse dans lequel vient en prise une broche du tube fixé à la carrosserie.

10. Dispositif déflecteur d'air selon la revendication 8 ou 9, **caractérisé en ce que** la forme du contour du guide à coulisse détermine le déroulement dans le temps du mouvement des éléments déflecteurs d'air supplémentaires (15, 16) et de l'élément déflecteur d'air principal (14).

11. Dispositif déflecteur d'air selon l'une quelconque ou plusieurs des revendications 1 à 10, **caractérisé en ce que** les éléments déflecteurs d'air supplémentaires latéraux (15, 16) ne sont pas visibles dans la position de repos de l'élément déflecteur d'air principal central (14).
